Europäisches Patentamt

European Patent Office

Office européen des brevets

(19)

(11) Veröffentlichungsnummer : **0 145 827**
**B1**

(12) **EUROPÄISCHE PATENTSCHRIFT**

(45) Veröffentlichungstag der Patentschrift :
30.12.86

(21) Anmeldenummer : 84103471.3

(22) Anmeldetag : 29.03.84

(51) Int. Cl.⁴ : **F 16 D   3/76**

(54) **Drehelastische Kupplung.**

(30) Priorität : 03.12.83 DE 3343857

(43) Veröffentlichungstag der Anmeldung :
26.06.85 Patentblatt 85/26

(45) Bekanntmachung des Hinweises auf die Patenterteilung : 30.12.86 Patentblatt 86/52

(84) Benannte Vertragsstaaten :
AT DE FR GB IT

(56) Entgegenhaltungen :
DE-C-  818 891
FR-A- 2 041 830
GB-A-   382 983
US-A- 2 362 008
US-A- 2 719 017
US-A- 2 727 368
US-A- 3 952 546

(73) Patentinhaber : Jörn, Frieda
Porschestrasse 10
D-7012 Fellbach (DE)

(72) Erfinder : Jörn, Raoul
Post Wasserburg a.B.
D-8992 Hengnau Nr. 53 1/7 (DE)

(74) Vertreter : Neubauer, Hans-Jürgen, Dipl.-Phys.
Fauststrasse 30
D-8070 Ingolstadt (DE)

## Beschreibung

Die Erfindung betrifft eine drehelastische Kupplung gemäß dem Oberbegriff des Anspruchs 1, zum Kuppeln von Wellen, insbesondere zur Verbindung von Verbrennungsmotoren mit nachgeschalteten, angetriebenen Maschinen.

Eine bekannte Kupplung (DE-A-2 440 302 & US-A-3 952 546, Fig. 8) besteht aus einer inneren zylindrischen Nabe, einem äußeren, die Nabe konzentrisch umgebenden Flansch und einer zwischen Nabe und Flansch einvulkanisierten Gummischicht, deren Mittelebene senkrecht zur Drehachse liegt, deren Breite im Bereich zwischen Nabe und Flansch schmaler als die Haftflächenbreiten ist und deren Außenkonturen im mittleren Bereich etwa Hyperbelform besitzen. Dabei weist die Nabe und der Flansch je einen umlaufenden, radial in die Gummischicht vorspringenden Bund auf, die umlaufenden Haftflächen an der Nabenaußenseite und Flanschinnenseite verlaufen zu beiden Seiten des umlaufenden Bundes zylindrisch, und die stirnseitig außenliegenden Gummifasern sind radial länger als die in der Mitte liegenden Gummifasern.

Durch den jeweils umlaufenden Bund und der dadurch erreichten vergrößerten Gummifaserlänge an der Außenseite gegenüber den Gummifaserlängen in der Mitte des Gummikörpers wird eine spannungsmindernde Wirkung und damit eine Verbesserung der Dauerfestigkeit erzielt. Über die Größe der Auswölbung des Bundes und damit über die Größe der Verkürzung der Gummifasern in der Mitte des Gummikörpers sind keine Aussagen gemacht. Die Dauerhaltbarkeit hängt jedoch entscheidend von der Größe dieses Verhältnisses ab, da damit das Verhältnis der Spannungen im Gummi an der Oberfläche und im Inneren bestimmt wird. Es führen somit nur bestimmte Verhältnisse zu der angestrebten hohen Dauerhaltbarkeit, während andere Verhältnisse keine Erhöhung der Dauerhaltbarkeit bewirken. Aufgrund praktischer Erfahrungen hat sich gezeigt, daß die kritischen Stellen für die Dauerhaltbarkeit gerade die Haftränder sind. Der Ausbildung dieser Stellen kommt für eine hohe Belastbarkeit und optimale Dauerfestigkeit eine entscheidende Bedeutung zu.

Aufgabe der Erfindung ist es daher, Angaben über die Größe des Verhältnisses der Gummifaserlänge an der Außenseite zur Innenseite des Gummikörpers zu machen und die Ausbildung der Haftränder anzugeben.

Diese Aufgabe wird bei einer gattungsgemäßen drehelastischen Kupplung mit den Merkmalen des Anspruchs 1 gelöst.

Nach Anspruch 1 sind für eine verbesserte Dauerfestigkeit die Haftränder so auszubilden, daß die auf die Achse projizierten Breiten der an die Stirnseiten angrenzenden zylindrischen Haftflächenabschnitte zusammen wenigstens ein Viertel der gesamten jeweiligen axialen Haftflächenbreite der Nabenaußenseite und der Flanschinnenseite betragen. Weiter sind die Auswölbungen der umlaufenden Bunde so zu bemessen, daß sich die in der Projektion auf eine Radialebene gemessene Länge der stirnseitig außenliegenden Gummifasern zur Länge der in der Mitte liegenden Gummifasern wie 6 : 5 oder kleiner 5 verhält. Bei einer solchen Bemessung und Gestaltung einer drehelastischen Kupplung wird die Belastbarkeit und Dauerhaltbarkeit erhöht.

Es hat sich gezeigt, daß die Dauerfestigkeit besonders günstig beeinflußt wird, wenn die Querschnittaußenkonturen der Gummischicht gemäß Anspruch 2 etwa senkrecht auf den zylindrischen Abschnitten der Haftflächen stehen.

Anhand einer Zeichnung wird ein Ausführungsbeispiel der Erfindung mit weiteren Merkmalen, Einzelheiten und Vorteilen näher erläutert.

Es zeigen :

Figur 1 einen Querschnitt durch eine drehelastische Kupplung,

Figur 2 eine Draufsicht auf die drehelastische Kupplung nach Fig. 1 in Axialrichtung,

Figuren 3 und 4 weitere Ausführungsformen von Profilen des in die Gummischicht eindringenden Bundes.

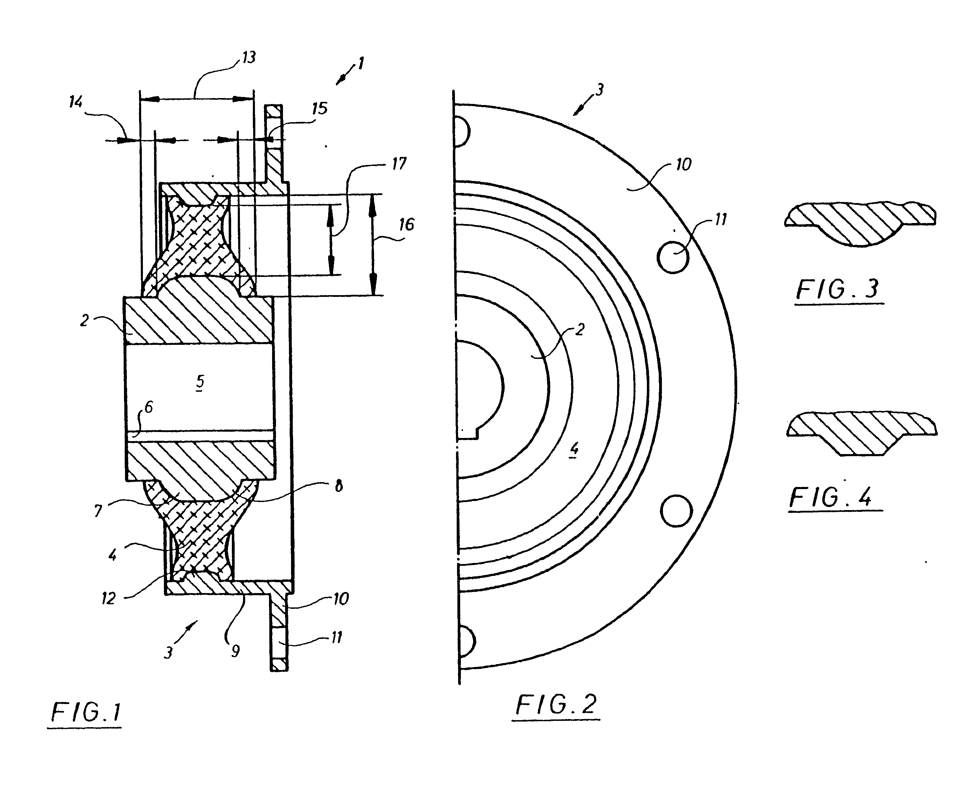

In Fig. 1 ist eine drehelastische Kupplung 1 dargestellt, die aus einer Nabe 2, einem äußeren, die Nabe konzentrisch umgebenden Flansch 3 und einer zwischen Nabe und Flansch einvulkanisierten Gummischicht 4 besteht. Die Nabe 2 enthält eine innere zylindrische Bohrung 5 zur Aufnahme einer (nicht dargestellten) Welle, die in eine, in axialer Richtung verlaufende Längsnut 6 eingreift und dort gegen Verdrehen gegenüber der Nabe 2 gesichert ist. Weiter enthält die Nabe 2 an ihrer zylindrischen Außenseite einen umlaufenden Bund 7, der seitlich mit Rundungen 8 zur Nabe 2 hin abfällt.

Der Flansch 3 besteht aus einem kurzen zylindrischen Ringteil 9, an dessen einer Stirnseite sich eine senkrecht zur Drehachse stehende Flanschplatte 10 anschließt, mit Bohrungen 11 zur Verbindung mit einem weiteren (nicht dargestellten) Wellenteil. An der Innenseite des Ringteils 9 gegenüber dem Bund 7, ist ebenfalls ein umlaufender Bund 12 angebracht. Der Bund 12 ist weniger breit und weniger hoch als der Bund 7 an der Nabe 2.

Die Gummischicht 4 umgibt den Bund 7 an der Nabe, und ist sowohl dort als auch noch stirnseitig über den Bereich der Nabe hinaus an der zylindrischen Außenseite der Nabe 2 anvulkanisiert. Die gesamte Haftflächenbreite an der Nabe 2 wird durch den Pfeil 13 dargestellt. Die Haftflächen an der zylindrischen Außenseite der Nabe 2 sollen dabei wenigstens ein Viertel der gesamten Haftflächenbreite 13 betragen, d. h. an jeder Seite ein Achtel der gesamten Haftflächenbreite, dargestellt durch die Pfeile 14, 15.

Die Gummischicht 4 umschließt auch den Bund 12 am Flansch 3, wobei auch hier die vorstehend ausgeführten Bemessungsregeln einzuhalten sind.

Mit dem Pfeil 16 ist der Abstand zwischen der zylindrischen Außenseite der Nabe 2 und zylindrischen Innenseite des Ringteils 9 bezeichnet und mit dem Pfeil 17 der Abstand zwischen dem Bund 7 und dem Bund 12. In vorliegendem Ausführungsbeispiel ist das Verhältnis zwischen den durch die Pfeile 16 und 17 dargestellten Abständen wie 6 : 5 (oder kleiner 5).

Die Gummischicht 4 ist in einem Bereich zwischen Nabe und Flansch im Querschnitt schmäler als jede der Haftflächenbreiten, insbesondere der Haftflächenbreite am Flansch 3, wobei die stirnseitigen Außenkonturen kontinuierlich verlaufen, so daß sich ein hyperbolischer Querschnitt ergibt. Die Hyperbelarme biegen aber im Bereich der Haftflächen ab und stehen etwa senkrecht auf diesen.

In Fig. 2 ist eine Draufsicht auf die drehelastische Kupplung 1 dargestellt, bei der wiederum die Nabe 2, der Flansch 3 mit der Flanschplatte 10 und den Bohrungen 11, sowie die Gummischicht 4 zu erkennen sind.

In Fig. 3 ist eine weitere mögliche Ausführungsform des Profils des Bundes 7 oder des Bundes 12 dargestellt. Nach Fig. 3 kann das Bundprofil auch im Querschnitt die Form eines Kreisabschnitts haben.

In Fig. 4 ist eine weitere Ausführungsform des Bundes 7 oder 12 dargestellt, wobei der Bund im Querschnitt trapezförmig gestaltet ist.

Die drehelastische Kupplung 1 hat folgende Funktion :

Zur Verbindung zweier Wellen, insbesondere zur Verbindung der Abtriebswelle eines Verbrennungsmotors mit der Antriebswelle einer nachgeschalteten, angetriebenen Maschine, wird die gezeigte drehelastische Kupplung zwischen diese beiden Wellen gesetzt. Eine Welle wird dazu mit der Nabe 2 und die andere Welle mit dem Flansch 3 verbunden. Zwischen den beiden Wellen ist somit die dreh-schub-beanspruchte elastische Gummischicht 4 gesetzt. Anfahrstöße sowie Schwingungen und Vibrationen werden von der Gummischicht 4 aufgenommen. Wegen der großen Elastizität in Drehrichtung eignet sich die erfindungsgemäße Ausführung der drehelastischen Kupplung 1 sehr gut für Schwingungsisolierungen. Wegen der ebenfalls axialen Weichheit werden von der Kupplung 1 Bautoleranzen, Einbautoleranzen und Verschiebungen im Wärmebereich in axialer Richtung gut aufgenommen. Das gleiche trifft für karadanische Verformungen zu. Bei keiner der vorgenannten Belastungen treten in der Gummischicht 4 oder den Haftflächen Spannungsspitzen oder lokale Belastungen auf, die die Dauerfestigkeit und Standzeit negativ beeinflussen können.

Zusammenfassend wird festgestellt, daß mit der erfindungsgemäßen drehelastischen Kupplung eine Wellenkupplung zur Verfügung gestellt wird, die einfach im Aufbau und durch nur wenige Teile preisgünstig herstellbar ist und zugleich den in der Praxis bestehenden Forderungen nach hoher Dauerfestigkeit, hoher Elastizität und starker axialer und kardanischer Verformbarkeit genügt.

**Patentansprüche**

1. Drehelastische Kupplung (1) bestehend aus einer inneren zylindrischen Nabe (2), einem äußeren, die Nabe (2) konzentrisch umgebenden Flansch (3) und einer zwischen Nabe (2) und Flansch (3) einvulkanisierten Gummischicht (4), deren Mittelebene senkrecht zur Drehachse liegt, deren Breite im Bereich zwischen Nabe (2) und Flansch (3) schmaler als die Haftflächenbreiten (13, 14, 15) ist und deren Außenkonturen im mittleren Bereich Hyperbelform besitzen, wobei die Nabe (2) und der Flansch (3) je einen umlaufenden, radial in die Gummischicht (4) vorspringenden Bund (7, 12) aufweisen, die umlaufenden Haftflächen (14, 15) an der Nabenaußenseite und der Flanschinnenseite zu beiden Seiten des umlaufenden Bundes (7, 12) zylindrisch verlaufen und die stirnseitig außenliegenden Gummifasern (16) radial länger sind als die in der Mitte liegenden Gummifasern (17), dadurch gekennzeichnet, daß die auf die Drehachse projizierten Breiten (14, 15) der an die Stirnseiten angrenzenden zylindrischen Haftflächenabschnitte zusammen wenigstens ein Viertel der gesamten jeweiligen axialen Haftflächenbreite der Nabenaußenseite (13) und der Flanschinnenseite betragen, und daß sich die in der Projektion auf eine Radialebene gemessene Länge (16) der stirnseitig außenliegenden Gummifasern zur Länge (17) der in der Mitte liegenden Gummifasern wie 6 : 5 oder kleiner 5 verhält.

2. Drehelastische Kupplung nach Anspruch 1, dadurch gekennzeichnet, daß die Querschnittaußenkonturen der Gummischicht (4) etwa senkrecht auf den zylindrischen Abschnitten der Haftflächen (13) stehen.

**Claims**

1. Rotational elastic coupling (1) consisting of an inner cylindrical hub (2), an outer the hub (2) concentrically surrounding flange (3), and a rubber layer (4) vulcanized between hub (2) and flange (3), the centre plane of the rubber layer (4) being square to the axis of rotation, the width of which in the region between hub (2) and flange (3) being narrower than the adhesive surfaces (13, 14, 15) widths, and the outer contours of which in the central region having hyperbolic shape, where the hub (2) and the flange (3) are provided with each one rotational collar (7, 12) radially projecting into the rubber layer (4), the rotational adhesive surfaces (14, 15) cylindrically run at the hub outer side and at the flange inner side on both sides of the rotational collar (7, 12), and the frontside located external rubber fibres (16) are longer than the rubber fibres (17) located in the centre, featured by, that the widths (14, 15) projected unto the axis of rotation of the cylindrical adhesive sections bordering on the frontsides at least amount to a quarter of the entire specific axial adhesive surfaces width of the outer hub side (13) and the inner flange side, and that the ratio of the length (16) measured in the projection unto a radial plane of the outer frontside located rubber fibres is 6 : 5 or less 5 to the length (17) of the centrally located rubber fibres.

2. Rotational elastic coupling according to claim 1, featured by that the cross-sectional outer contours of the cubber layer (4) stand approximately vertical on the cylindrical sections of the adhesive surfaces (13).

## Revendications

1. Accouplement élastique en rotation (1) se composant d'un moyeu cylindrique intérieur (2), d'un flasque extérieur (3) entourant concentriquement le moyeu (2) et d'une couche de caoutchouc (4) fixée par vulcanisation entre le moyeu (2) et le flasque (4), dont le plan médian est perpendiculaire à l'axe de rotation, dont la largeur dans une zone située entre le moyeu (2) et le flasque (3) est plus étroite que les largeurs de surfaces d'adhérence (13, 14, 15) et dont les contours extérieurs dans une zone intermédiaire ont une forme hyperbolique, le moyeu (2) et le flasque (3) comportant chacun un collet périphérique (7, 12) faisant saillie radialement dans la couche de caoutchouc (4), les surfaces périphériques d'adhérence (14, 15) sur le côté extérieur du moyeu et sur le côté intérieur du flasque ayant un profil cylindrique des deux côtés du collet périphérique (7, 12) et les fibres de caoutchouc (16) placées extérieurement sur les côtés frontaux étant radialement plus longues que les fibres de caoutchouc (17) placées au milieu, caractérisé en ce que les largeurs (14, 15), projetées sur l'axe de rotation, des parties cylindriques des surfaces d'adhérence adjacentes aux côtés frontaux s'élèvent au total à au moins un quart de la largeur axiale totale correspondante des surfaces d'adhérence sur le côté extérieur du moyeu (13) et sur le côté inférieur du flasque, et en ce que le rapport entre la longueur (16), mesurée en projection sur un plan radial, des fibres de caoutchouc placées extérieurement sur les côtés frontaux et la longueur (17) des fibres de caoutchouc placées au milieu est de 6 : 5 ou inférieur à 5.

2. Accouplement élastique en rotation selon la revendication 1, caractérisé en ce que les contours extérieurs de la section droite de la couche de caoutchouc (4) sont à peu près perpendiculaires aux parties cylindriques des surfaces d'adhérence (13).

FIG.1

FIG.2

FIG.3

FIG.4

0 145 827